(19) Europäisches Patentamt
European Patent Office
Office européen des brevets

(11) **EP 4 694 385 A1**

(12) **EUROPEAN PATENT APPLICATION**
published in accordance with Art. 153(4) EPC

(43) Date of publication:
**11.02.2026 Bulletin 2026/07**

(21) Application number: **23934989.7**

(22) Date of filing: **06.11.2023**

(51) International Patent Classification (IPC):
*H04W 52/14* $^{(2009.01)}$

(52) Cooperative Patent Classification (CPC):
**H04W 52/14; H04W 52/24; H04W 76/28**

(86) International application number:
**PCT/CN2023/129960**

(87) International publication number:
**WO 2024/221821 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2023 CN 202310485236**

(71) Applicant: **ZTE CORPORATION
Shenzhen, Guangdong 518057 (CN)**

(72) Inventor: **WU, Qi
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **TRANSMIT POWER ADJUSTMENT METHOD AND APPARATUS, DEVICE, AND READABLE STORAGE MEDIUM**

(57) The present application discloses a transmit power adjustment method, a transmit power adjustment apparatus, a transmit power adjustment device, and a storage medium, and relates to the technical field of communications. The transmit power adjustment method includes: determining a Format of a physical uplink control channel, PUCCH, of a terminal device; determining a target transmit power for each Format; and adjusting the transmit power of each Format in the terminal device to within a hysteresis range of a corresponding target transmit power.

```
┌─────────────────────────────────────────────────────────────┐
│ determining a Format of a physical uplink control channel     │ ─── S10
│          (PUCCH) of a terminal device                         │
└─────────────────────────────────────────────────────────────┘
                              │
                              ▼
┌─────────────────────────────────────────────────────────────┐
│   determining a target transmit power for each Format         │ ─── S20
└─────────────────────────────────────────────────────────────┘
                              │
                              ▼
┌─────────────────────────────────────────────────────────────┐
│ adjusting the transmit power of each Format in the terminal device │ ─── S30
│ to within a hysteresis range of a corresponding target transmit    │
│ power                                                              │
└─────────────────────────────────────────────────────────────┘
```

FIG. 1

**Description**

**CROSS-REFERENCE TO RELATED APPLICATIONS**

This application claims priority to Chinese Patent Application No. 202310485236.8, filed on April 28, 2023. The disclosure of the above-mentioned application is incorporated herein by reference in their entireties.

**TECHNICAL FIELD**

The present application relates to the technical field of communications, and more particularly to a transmit power adjustment method, a transmit power adjustment apparatus, a transmit power adjustment device, and a readable storage medium.

**BACKGROUND**

Currently, PUCCH (Physical Uplink Control Channel) uplink power control is divided into open-loop power control and closed-loop power control. The open-loop power control terminal calculates the transmit power according to the protocol requirements, which is an autonomous behavior of the terminal, and the terminal cannot sense whether the transmit power is reasonable. Closed-loop power control is that based on open-loop power control, the base station adjusts the terminal's transmit power according to the uplink reception performance by sending TPC (Transmit Power Control) to the terminal. The base station adjusts the transmit power of the PUCCH based on the difference between the received PUCCH signal-to-interference plus noise ratio (SINR) and the target SINR, so that the terminal's transmit power falls within the power range specified by the target SINR. However, PUCCH has multiple Formats, different Formats have different reception performances, that is, different requirements for target SINR. Currently, closed-loop power control usually adjusts the terminal's transmit power based on a target SINR. Therefore, existing closed-loop power control cannot accurately adjust the terminal's uplink transmit power.

**SUMMARY**

The main purpose of the present application is to provide a transmit power adjustment method, a transmit power adjustment apparatus, a transmit power adjustment device, and a readable storage medium, aiming to address the technical problem that existing closed-loop power control cannot accurately adjust the terminal's uplink transmit power.
To achieve the above purposes, the present application provides a transmit power adjustment method, including:

determining a Format of a physical uplink control channel (PUCCH) of a terminal device;
determining a target transmit power for each Format; and
adjusting the transmit power of each Format in the terminal device to within a hysteresis range of a corresponding target transmit power.

Furthermore, to achieve the above-mentioned purposes, the present application provides a transmit power adjustment apparatus, including:

a first determination module configured for determining a Format of a physical uplink control channel (PUCCH) of a terminal device;
a second determination module configured for determining a target transmit power for each Format; and
an adjustment module configured for adjusting the transmit power of each Format in the terminal device to within a hysteresis range of a corresponding target transmit power.

Furthermore, to achieve the above-mentioned purposes, the present application provides a transmit power adjustment device. The transmit power adjustment device includes a memory, a processor, and a transmit power adjustment program stored in the memory and executable on the processor, and the aforementioned transmit power adjustment method is implemented when the transmit power adjustment program is executed by the processor.
Furthermore, to achieve the above-mentioned purposes, the present application provides a readable storage medium, a transmit power adjustment program is stored on the readable storage medium, and the aforementioned transmit power adjustment method is implemented when the transmit power adjustment program is executed by the processor.

## BRIEF DESCRIPTION OF THE DRAWINGS

In order to explain the embodiments of the present application or the technical solutions in the existing technology more clearly, the accompanying drawings needed to be used in the description of the embodiments or the existing technology will be briefly introduced below. Obviously, the accompanying drawings in the following description are only some embodiments of the present application, other accompanying drawings can be obtained based on the provided accompanying drawings without exerting creative efforts for those skilled in the art.

FIG. 1 is a flowchart of a first embodiment of a transmit power adjustment method of the present application.
FIG. 2 is a flowchart of a second embodiment of a transmit power adjustment method of the present application.
FIG. 3 is a flowchart of a third embodiment of a transmit power adjustment method of the present application.
FIG. 4 is a flowchart of a specific embodiment of a transmit power adjustment method of the present application.
FIG. 5 is a functional block diagram of a transmit power adjustment apparatus according to an embodiment of the present application.
FIG. 6 is a hardware structure diagram of a device involved in an embodiment of the present application.

The realization of the purpose, functional features and advantages of the present application will be further described in conjunction with the embodiments and with reference to the accompanying drawings.

## DETAILED DESCRIPTION OF THE EMBODIMENTS

It should be understood that the specific embodiments described here are only used to explain the present application and are not used to limit the present application.

The technical solutions in the embodiments according to the present application will be clearly and completely described below in conjunction with the accompanying drawings in the embodiments according to the present application, and it is clear that the described embodiments are only a part of the embodiments according to the present application, and not all of the embodiments. Based on the embodiments in the present application, all other embodiments obtained by those skilled in the art without making creative labor fall within the scope of the present application.

It should be noted that in the embodiment of the present application, all directional indications (such as up, down, left, right, front, back or the like) are only used to explain the relative positional relationship, movement and so on between various components in a specific posture (as shown in the accompanying drawings). If the specific posture changes, the directional indication will also change accordingly.

In the present application, unless otherwise clearly stated and limited, the terms "connection", "fixed" and so on should be understood in a broad sense. For example, "connection" can be a fixed connection, a detachable connection or an integral body; it can be a mechanical connection or an electrical connection; it can be a direct connection or an indirect connection through an intermediate medium; it can be an internal connection between two components, or the interaction between two components, unless otherwise expressly limited. Those skilled in the art will understand the specific meanings of the above terms in the present application according to the specific circumstances.

In addition, references to "first", "second" and so on in the present application are for descriptive purposes only and should not be construed as indicating or implying relative importance or implicitly specifying the number of technical features indicated. Therefore, features specified as "first" or "second" may explicitly or implicitly include at least one such feature. Furthermore, the technical solutions of the various embodiments may be combined, but only if they are achievable by those skilled in the art. If a combination of technical solutions contradicts or is unachievable, such combination shall be deemed non-existent and outside the scope claimed in the present application.

The current PUCCH uplink power control process is mainly that the base station adjusts the PUCCH transmit power according to the difference between the received PUCCH signal-to-noise ratio SINR and the target SINR, so that the terminal's transmit power is within the power range determined by the target SINR. The target SINR is typically that determining a fixed SINR in advance. The target SINR corresponds to a specific range. When the signal-to-noise ratio SINR is within this range, the base station sends a TPC no-adjustment command, and the terminal maintains the current uplink transmit power unchanged. When the signal-to-noise ratio SINR is below this range, the base station sends a TPC raise command, and the terminal increases the uplink transmit power. When the signal-to-noise ratio SINR is greater than this range, the base station sends a TPC lower command, and the terminal reduces the uplink transmit power.

PUCCH has multiple Formats, and different Formats have different reception performance. Currently, the uplink power control target SINR is the same fixed value, typically a relatively optimal value derived from a simulation of the according to algorithm. However, the actual environment is affected by various interference factors, the same PUCCH uplink power control target SINR cannot adapt to all Formats' adjustment. When using Format 1 as the measurement value, it is found that a large amount of DTX occurs in certain scenarios, but when using Format 3 as the measurement value, this phenomenon does not occur. The same PUCCH uplink power control target SINR may be appropriate when using Format 3 as the measurement value, but it may be too low or too high for other Formats. Consequently, when the channel conditions are poor, the PUCCH uplink power control target SINR will be relatively too low, causing the base station to be unable to correctly demodulate to the PUCCH channel resources, affecting the base station demodulation performance (may be abbreviated as performance in subsequent steps), resulting in reduced downstream traffic; when the channel conditions are good, the PUCCH uplink power control target SINR will be relatively too high, causing a waste of the terminal's uplink transmit power, and causing uplink interference to neighboring users. Therefore, a single fixed target SINR may cause problems such as being unable to adapt to all PUCCH Formats and having poor adjustment accuracy; when the channel conditions are poor, the target SINR is set relatively low, affecting the base station demodulation performance; when the channel conditions are good, the target SINR is set relatively high, and the excess performance causes waste of power consumption correspondingly, which may also cause other interference.

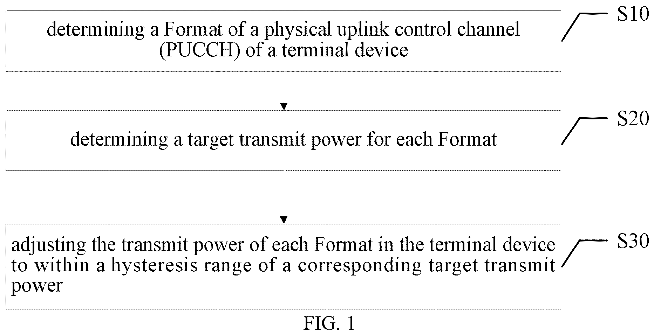

To address the above-mentioned situation, the present application proposes a transmit power adjustment method. Referring to FIG. 1, which is a flow chart of a first embodiment of the transmit power adjustment method in the present application. In this embodiment, the transmit power adjustment method includes:

Step S10: determining a Format of a physical uplink control channel (PUCCH) of a terminal device.

In this embodiment, the above-mentioned transmit power adjustment method can be applied to a base station. The above-mentioned terminal device is typically a smart device, such as a smartphone, a tablet, a smartwatch, or other device. Those skilled in the art will appreciate that currently, the types of Format include Format0, Format1, Format2, Format3, and Format4. The technicians can increase or decrease the Format type according to the needs. In the process that the terminal device achieves communication by the base station, the base station can determine the type of Format used by the terminal device. This will facilitate the subsequent setting of different target sending functions for different Format types.

Step S20: determining a target transmit power for each Format.

The above-mentioned target transmit power refers to the transmit power that the terminal device is expected to use during communication. In this embodiment, different target transmit powers are set for different Formats. For example, target transmit power 0 to target transmit power 4 can be set for Format 0 to Format 4, respectively. The specific power values for these different target transmit powers can be set by the technician based on the differences in the reception performance of the corresponding Format. This will not be further described here.

Step S30: adjusting the transmit power of each Format in the terminal device to within a hysteresis range of a corresponding target transmit power.

The above-mentioned hysteresis range of the target transmit power is determined based on the target transmit power and a preset power fluctuation range. For example, assuming the target transmit power 0 of Format 0 is a and the fluctuation range is b, the determined hysteresis range of the target transmit power is [a-b, a+b].

For example, the base station can send a TPC adjustment command to the terminal device to adjust the transmit power of different Formats of the terminal device, ensuring that the transmit power of different Formats of the terminal device remains within the hysteresis range of the corresponding target transmit power. Similarly, based on the above-mentioned Format0 example to illustrate, by sending a TPC adjustment command for Format0 to the terminal device, the transmit power of Format0 of the terminal device can be kept within the range of [a-b, a+b]. When adjusting the transmit power of each Format of the terminal device, the adjustment can be made based on the signal-to-noise ratio SINR of each Format. Accordingly, in actual applications, the target transmit power of different Formats can also be expressed in the form of a target SINR.

In this embodiment, determining a Format of a physical uplink control channel (PUCCH) of a terminal device; determining a target transmit power for each Format; and adjusting the transmit power of each Format in the terminal device to within a hysteresis range of a corresponding target transmit power. That is, this embodiment sets different target transmit powers for different formats of the terminal device PUCCH channel, and adjusts the transmit power of the corresponding format in the PUCCH channel of the terminal device based on the target transmit power of each format, so that the transmit power of each format remains within the hysteresis range of the corresponding target transmit power. Compared to traditional solutions, this embodiment adjusts the actual transmit power for each Format in a terminal device based on different target transmit powers, thus avoiding the problem of adjustments based on a single target value failing to accommodate differences in reception performance for each Format, resulting in the transmit power for a particular Format being too high or too low, thereby improving the accuracy of transmit power adjustments for the terminal device, and balancing performance and energy consumption during communication between the base station and the terminal device.

In the first embodiment, the target transmit power for each PUCCH Format in the terminal device can be a fixed value pre-set by a technician. However, in actual applications, environmental changes (such as weather changes) may cause the pre-set target transmit power to mismatch the application environment (that is, the target transmit power setting may be inappropriate); correspondingly, in the case of mismatch, the pre-set target transmit power may be too low, and the base station cannot correctly demodulate to the PUCCH channel resources, affecting the base station demodulation performance; the pre-set target transmit power may be too high, and the corresponding base station demodulation performance is excessive, resulting in wasteful power consumption. Therefore, to address this situation, this embodiment will dynamically adjust and determine the target transmit power for each Format. It should be noted that to ensure the effectiveness of the adjustment to the target transmit power, it can be that after performing the step of adjusting the transmit power of each Format in the terminal device to within a hysteresis range of a corresponding target transmit power, then returning to perform the step of determining a target transmit power for each Format. That is, after adjusting the transmit power of each Format to within a hysteresis range of a corresponding target transmit power, re-determining whether the target transmit power setting at this time is reasonable, and adjusting the target transmit power if it is unreasonable.

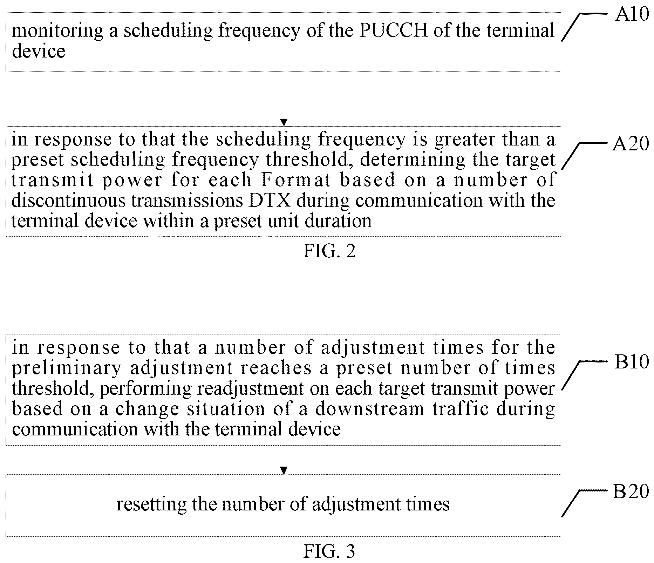

Referring to FIG. 2, a second embodiment of the present application is provided based on the first embodiment of the present application. The parts of this embodiment that are identical to the above-mentioned embodiments can be referred to above and will not be further described here. The determining the target transmit power for each Format includes:

Step A10: monitoring a scheduling frequency of the PUCCH of the terminal device.

Step A20: in response to that the scheduling frequency is greater than a preset scheduling frequency threshold, determining the target transmit power for each Format based on a number of discontinuous transmissions (DTX) during communication with the terminal device within a preset unit duration.

Exemplarily, monitoring the scheduling frequency of the PUCCH of the terminal device may count the number of times scheduling occurs or the number of times scheduling requests are initiated for each Format of PUCCH of the terminal device within a time window of a preset length, and the corresponding number of times is the scheduling frequency. In this embodiment, the scheduling frequency will be used to determine whether the target transmit power is reasonable. In the case that the scheduling frequency is less than or equal to a preset scheduling frequency threshold, scheduling is infrequent, determining that the current target transmit power setting is reasonable. Conversely, in the case that the scheduling frequency is greater than the preset scheduling frequency threshold, scheduling is too frequent, determining that the current target transmit power setting is unreasonable. In the case that the current target transmit power setting is unreasonable, the base station determines the target transmit power for each Format based on the number of discontinuous transmissions (DTX) during communication with the terminal device within a preset unit duration. The above-mentioned preset unit duration can be a time window or the duration corresponding to a time window when determining the scheduling frequency, or can be a duration set by technical personnel based on needs. Counting the number of DTXs during communication between the base station and the terminal device in the preset unit duration, and re-determining the target transmit power for each Format based on the number of DTXs. For example, it can be that the current target transmit power is adjusted based on the single DTX number of each Format's target transmit power to obtain a new target transmit power. If the single DTX number for a certain Format is greater than a high preset number threshold, the target transmit power for that Format is raised accordingly; if the single DTX number for a certain Format is less than a low preset number threshold, the target transmit power for that Format is lowered accordingly, thereby adjusting the target transmit power based on the number of DTX.

In a feasible embodiment, the number of the DTX includes a single DTX number for each Format and a total DTX number for each of the single DTX numbers; the determining the target transmit power for each Format based on a number of discontinuous transmissions (DTX) during communication with the terminal device within a preset unit duration includes:

Step A210: determining a DTX ratio of the single DTX number for each Format relative to the total DTX number.

Step A220: in response to that there is a first DTX ratio that is not within a preset ratio range among the DTX ratios, performing preliminary adjustment on a target transmit power of an associated Format based on the first DTX ratio to determine a new target transmit power.

Step A230: in response to that there is a second DTX ratio that is within the preset range among the DTX ratios, maintaining a target transmit power of the Format associated with the second DTX ratio unchanged.

Exemplarily, the number of the DTX may include the single DTX number of each Format and the total DTX number of each single DTX number. Calculating the DTX ratio of each Format's single DTX number relative to the total DTX number. For example, assuming the single DTX number of Format0 is n and the total DTX number is m, the DTX ratio of Format0 is n/m. Comparing the DTX ratio of each Format with a preset ratio range, and taking the DTX ratio of the Format that is not within the preset ratio range as the first DTX ratio. The preset ratio range is set by a technician according to requirements. Correspondingly, based on the first DTX ratio, making a preliminary adjustment to the target transmit power of the associated Format to determine a new target transmit power. The associated Format refers to the Format corresponding to the first DTX ratio. For example, if the DTX ratio of Format0 is not within the preset ratio range, then the DTX ratio a of Format0 is a first DTX ratio a. The first DTX ratio a corresponds to or is associated with Format0. Then, adjusting the target transmit power of Format0 based on the first DTX ratio a. Conversely, the DTX ratio within the preset ratio range is the second DTX ratio, and the target transmit power of the Format associated with the second DTX ratio remains unchanged.

In this embodiment, determining the target transmit power to be adjusted based on the ratio situation of the single DTX number of each Format to the total DTX number; for example, taking the target transmit power of the Format with excessive or insufficient ratio of number of the DTX as the adjustment object to perform adjustment, thereby balancing communication performance and energy consumption.

In a feasible embodiment, the performing preliminary adjustment on a target transmit power of an associated Format based on the first DTX ratio to determine a new target transmit power includes:

Step A221: comparing the first DTX ratio with a boundary value of a preset ratio range, wherein the boundary value includes a preset low ratio threshold and a preset high ratio threshold, and the preset low ratio threshold being less than the preset high ratio threshold.

Step A222: in response to that the first DTX ratio is less than the preset low ratio threshold, reducing the target transmit power of the associated Format by a preset power adjustment step to obtain a new target transmit power.

Step A223: in response to that the first DTX ratio is greater than the preset low ratio threshold, increasing the target transmit power of the associated Format by the preset power adjustment step to obtain the new target transmit power.

Exemplarily, the above-mentioned preset ratio range includes a preset low ratio threshold and a preset high ratio threshold, and the preset low ratio threshold is smaller than the preset high ratio threshold. For example, assuming that the preset ratio range is [15%, 25%], and correspondingly, the preset low ratio threshold is 15%, and the high ratio threshold is 25%. Comparing each first DTX ratio with a boundary value (including the preset low ratio threshold and the preset high ratio threshold); if the first DTX ratio is less than the preset low ratio threshold, reducing the target transmit power of the Format associated with the first DTX ratio by a preset power adjustment step and obtaining a new target transmit power; if the first DTX ratio is less than the preset low ratio threshold, it means that the number of DTXs of the Format associated with the first DTX ratio is relatively small, that is, the base station demodulation performance is better under this Format, so the target transmit power of the Format can be reduced, thereby reducing power consumption while ensuring performance. On the contrary, if the first DTX ratio is greater than the preset high ratio threshold, increasing the target transmit power of the Format associated with the first DTX ratio by the preset power adjustment step; if the first DTX ratio is greater than the preset high ratio threshold, it means that the number of DTXs of the Format associated with the first DTX ratio is relatively large, that is, the base station demodulation performance is poor under this Format, so the target transmit power of the Format can be increased to meet the demodulation performance requirements of the base station. In addition, for different Formats, the preset power adjustment step can be different each time the target transmit power is adjusted. For example, technicians can set different power adjustment steps for different Formats according to actual conditions to meet the different precision adjustment requirements of different Formats for the target transmit power.

After adjusting the target transmit power of Format, that is, re-determining the target transmit power of each Format, it can be determined whether the transmit power of each Format is within the hysteresis range of the corresponding target transmit power. If the transmit power of any Format is not within the hysteresis range of the corresponding target transmit power, the step of adjusting the transmit power of each Format in the terminal device to within a hysteresis range of a corresponding target transmit power can be performed.

Referring to FIG. 3, based on the second embodiment of the present application, a third embodiment of the present application is provided, the determining a target transmit power for each Format further includes:

Step B10: in response to that a number of adjustment times for the preliminary adjustment reaches a preset number of times threshold, performing readjustment on each target transmit power based on a change situation of a downstream traffic during communication with the terminal device.

Step B20: resetting the number of adjustment times.

In this embodiment, to further ensure the rationality of the target transmit power adjustment, after adjusting the target transmit power based on the number of DTXs, the adjustment result will be readjusted based on change situation in downstream traffic during communication between the base station and the terminal device before and after the adjustment.

For example, the above-mentioned preliminary adjustment refers to the adjustment based on the number of DTXs. Each preliminary adjustment causes the target transmit power to change. Each preliminary adjustment is based on a preset power adjustment step. Therefore, the above-mentioned change situation in downstream traffic before and after one preliminary adjustment are not obvious and cannot be used as a basis for verification or readjustment. Therefore, the number of adjustment times of the preliminary adjustment can be recorded; in the case of the number of adjustment times reaches the preset number of times threshold, readjusting each target transmit power based on the change situation of the downstream traffic during the communication with the terminal device. The specific preset threshold can be set by technical personnel based on actual needs. After readjustment, resetting the number of adjustment times.

DTX is determined based on confidence. If it does not exceed the confidence threshold, it is considered DTX. The confidence threshold setting may be inaccurate. Relying solely on DTX to adjust the target transmit power can result in the phenomenon of a decrease in downstream traffic, or the phenomenon that downstream traffic remains unchanged, but power continues to rise and oversaturation occurs. Therefore, in this embodiment, adding the change situation of the downstream traffic after adjustment to readjust the target transmit power to ensure the rationality of the adjustment, and achieve a balance between performance and power consumption during communication.

In a feasible embodiment, before the performing readjustment on each target transmit power based on a change situation of a downstream traffic during communication with the terminal device, the method includes:

Step B01: obtaining a downstream traffic after the number of adjustment times starts triggering an accumulation as a first downlink traffic.

Step B02: obtaining a downstream traffic after the number of adjustment times reaches the preset number of times threshold to determine a second downstream traffic.

Step B03: determining the change situation of the downstream traffic during communication with the terminal device according to the first downstream traffic and the second downstream traffic.

In this embodiment, after performing readjustment, the number of adjustment times will be reset. Therefore, the number of adjustment times is typically recorded and accumulated starting from zero. When the number of adjustment times accumulates from zero, recording the downstream traffic at that time as the first downstream traffic. Correspondingly, after the number of adjustment times reaches a preset number of times threshold, recording the downstream traffic at that time as the second downstream traffic. Determining the change situation of the downstream traffic during communication between the base station and the terminal device according to the first downstream traffic and the second downstream traffic. For example, the difference between the second downstream traffic and the first downstream traffic can be used as the change situation, that is, the second downstream traffic - the first downstream traffic = the downstream traffic variation.

In a feasible embodiment, the performing readjustment on each target transmit power based on a change situation of a downstream traffic during communication with the terminal device includes:

Step B110: in response to that the change situation is that the downstream traffic increases and an amount of increase in the downstream traffic is less than or equal to a preset threshold of the amount of increase, maintaining each target transmit power unchanged.

Exemplarily, in a scenario where the change situation is that the downstream traffic increases and an amount of increase in the downstream traffic is less than or equal to a preset threshold of the amount of increase, maintaining each target transmit power unchanged. For example, similarly, based on the above-mentioned example, the variation of downstream traffic is greater than zero, or the variation of downstream traffic is less than or equal to the preset threshold of the amount of increase. After adjusting the target transmit power based on DTX, the downstream traffic has a small increase, which does not cause excessive power consumption. At this time, the target transmit power is reasonable and does not need to be readjusted, and the target transmit power remains unchanged.

In a feasible embodiment, the performing readjustment on each target transmit power based on a change situation of a downstream traffic during communication with the terminal device further includes:

Step B120: in response to that the change situation is that the downstream traffic remains unchanged and an overall transmit power of each target transmit power is not raised in a process of accumulating the number of adjustment times, maintaining each target transmit power unchanged.

Exemplarily, in a scenario where the change situation is that the downstream traffic remains unchanged and an overall transmit power of each target transmit power is not raised in a process of accumulating the number of adjustment times, maintaining each target transmit power unchanged. For example, the above-mentioned variation of the downstream traffic is zero, and during the process of accumulating the number of adjustment times, the target transmit power of different Formats may be adjusted in different ways. For example, the target transmit power of some Formats may be raised, while the target transmit power of other Formats may be lowered. Determining the adjustment situation of the overall transmit power of each target transmit power, the sum of the variation of the target transmit power of each Format is the adjustment situation of the overall transmit power. If the adjustment situation is not raised, that is, lowered or unchanged, it means that power consumption is decreasing or unchanged, but performance is not affected, therefore, at this time, each target transmit power is reasonable and no readjustment is required, and remaining the target transmit power unchanged..

In a feasible embodiment, the performing readjustment on each target transmit power based on a change situation of a downstream traffic during communication with the terminal device further includes:

Step B130: in response to that the change situation is that the downstream traffic remains unchanged and an overall transmit power of each target transmit power is raised in a process of accumulating the number of adjustment times, taking a target transmit power with a largest number of times of raising power in an accumulating process of the number of adjustment times as a readjustment object.

Step B131: lowering the readjustment object by a preset power adjustment step, and obtaining a readjusted target transmit power.

Step B132: after adjusting a transmit power of the Format associated with the readjusted target transmit power in the terminal device to within a hysteresis range of the readjusted target transmit power, obtaining a current downstream traffic of the terminal device and re-determining the second downstream traffic.

Step B133: executing the determining the change situation of the downstream traffic during communication with the terminal device according to the first downstream traffic and the second downstream traffic and subsequent steps based on a re-determined second downstream traffic.

Exemplarily, in a scenario where the change situation is that the downstream traffic remains unchanged and an overall transmit power of each target transmit power is raised in a process of accumulating the number of adjustment times, that is, indicating that the overall transmit power has increased, but performance has not been affected. In this case, the target transmit power is not reasonable, selecting a target transmit power with a largest number of times of raising power in an accumulating process of the number of adjustment times as a readjustment object. The adjustment method and the number of adjustment times for each target transmit power may be different during the process of accumulating the number of adjustment times. At this time, the overall power of the target transmit power is raised, and the performance remains unchanged, which means that the power has increased excessively, and taking the target transmit power with the largest number of times of raising power during adjustment as the readjustment object. Then, the readjustment object is adjusted down by the preset power adjustment step to obtain the readjusted target transmit power to reduce power consumption. After adjusting the transmit power of the Format associated with the readjusted target transmit power in the terminal device to within the hysteresis range of the readjusted target transmit power, obtaining the current downstream traffic between the base station and the terminal device, and re-determining the second downstream traffic, that is, taking the current downstream traffic between the base station and the terminal device as the new second downstream traffic. Then, based on the newly determined second downstream traffic, executing the determining the change situation of the downstream traffic during communication with the terminal device according to the first downstream traffic and the second downstream traffic and subsequent steps. That is, determining the change situation of the downstream traffic after readjustment to determine whether to continue readjustment.

In a feasible embodiment, the performing readjustment on each target transmit power based on a change situation of a downstream traffic during communication with the terminal device further includes:

Step B140: in response to that the change situation is that the downstream traffic decreases, taking a target transmit power with a largest number of times of lowering power in an accumulating process of the number of times of adjustment as a readjustment object.

Step B141: raising the readjustment object by a preset power adjustment step and obtaining a readjusted target transmit power.

Step B142: after adjusting a transmit power of the Format associated with the readjusted target transmit power in the terminal device to within a hysteresis range of the readjusted target transmit power, obtaining a current downstream traffic of the terminal device and re-determining the second downstream traffic.

Step B143: executing the determining the change situation of the downstream traffic during communication with the terminal device according to the first downstream traffic and the second downstream traffic and subsequent steps based on a re-determined second downstream traffic.

For example, in a scenario where the change situation is that the downstream traffic decreases, taking a target transmit power with a largest number of times of lowering power in an accumulating process of the number of times of adjustment as a readjustment object; and raising the readjustment object by a preset power adjustment step and obtaining a readjusted target transmit power. A decrease in downstream traffic indicates performance degradation and excessive power reduction, so raising the above-mentioned determined readjustment object by a preset power adjustment step to improve performance. Then, after adjusting a transmit power of the Format associated with the readjusted target transmit power in the terminal device to within a hysteresis range of the readjusted target transmit power, obtaining a current downstream traffic of the terminal device and re-determining the second downstream traffic; and executing the determining the change situation of the downstream traffic during communication with the terminal device according to the first downstream traffic and the second downstream traffic and subsequent steps based on a re-determined second downstream traffic.

In a feasible embodiment, the performing readjustment on each target transmit power based on a change situation of a downstream traffic during communication with the terminal device further includes:

Step B150: in response to that the change situation is that the downstream traffic increases and an amount of increase in the downstream traffic is greater than a preset threshold of the amount of increase, taking a target transmit power with a largest number of times of raising power in an accumulating process of the number of times of adjustment as a readjustment object.

Step B151: lowering the readjustment object by a preset power adjustment step and obtaining a readjusted target transmit power.

Step B152: after adjusting a transmit power of the Format associated with the readjusted target transmit power in the terminal device to within a hysteresis range of the readjusted target transmit power, obtaining a current downstream traffic of the terminal device and re-determining the second downstream traffic.

Step B153: executing the determining the change situation of the downstream traffic during communication with the terminal device according to the first downstream traffic and the second downstream traffic and subsequent steps based on a re-determined second downstream traffic.

Exemplarily, in the case that the change situation is that the downstream traffic increases and an amount of increase in the downstream traffic is greater than a preset threshold of the amount of increase, taking a target transmit power with a largest number of times of raising power in an accumulating process of the number of times of adjustment as a readjustment object; and raising the readjustment object by a preset power adjustment step and obtaining a readjusted target transmit power. If the downstream traffic increases and the amount of increase is greater than the preset threshold of the amount of increase, it means that the performance improvement is excessive and the performance can be appropriately reduced to reduce power consumption; therefore, lowering the readjustment object of the target transmit power with a largest number of times of raising power. Then, after adjusting a transmit power of the Format associated with the readjusted target transmit power in the terminal device to within a hysteresis range of the readjusted target transmit power, obtaining a current downstream traffic of the terminal device and re-determining the second downstream traffic; and executing the determining the change situation of the downstream traffic during communication with the terminal device according to the first downstream traffic and the second downstream traffic and subsequent steps based on a re-determined second downstream traffic.

In this embodiment, readjusting the results of adjusting each target transmit power based on the number of the DTX according to the transformation situation in the downlink traffic, thus further improving the rationality of the adjustment results of each target transmit power and ensuring the balance between performance and energy consumption during the communication process.

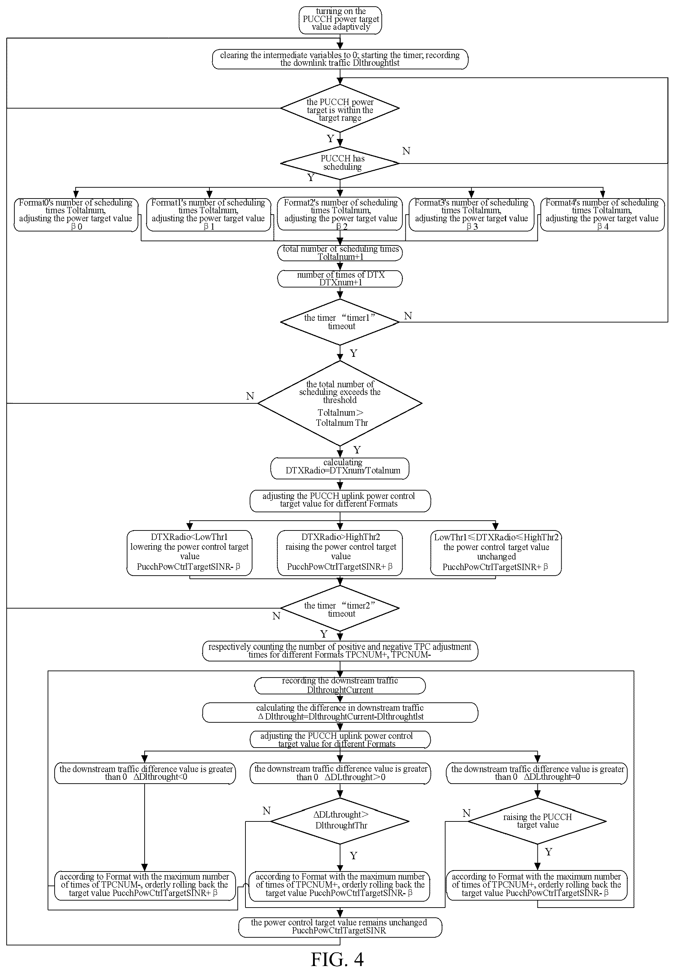

Referring to FIG. 4 for a flowchart of a specific embodiment of the present application. The transmit power adjustment method described in this embodiment includes the following content.

In this embodiment, the target transmit power is expressed as a power target value SINR.

For example, referring to FIG. 4, first, turning on the PUCCH power target value adaptively, and clearing the intermediate variables to 0, including the intermediate number of scheduling times, the number of the DTX, and the number of times of the preliminary adjustment, etc.; starting the timer (used to form a time window, including a time window for generating the scheduling frequency, or used to form a preset unit duration for recording the number of the DTX), and recording the downlink traffic Dlthroughtlst. Determining whether the PUCCH power target is within the target range, that is, determining whether the transmit power of each Format in the terminal device is within the hysteresis range of the corresponding target transmit power. In this embodiment, the step of adjusting the transmit power of each Format in the terminal device to within a hysteresis range of a corresponding target transmit power (that is, adjusting the signal-to-noise ratio SINR of each Format's transmitted signal within the hysteresis range of the corresponding target SINR) and the PUCCH power target adaptation function can be performed simultaneously. That is, when the target SINR changes, it can be executed to determine whether the PUCCH power target is within the target range; if not, then adjusting the PUCCH power target to within the target range.

For example, the number of scheduling times of different Formats recorded in time window 1 (formed by the timer1), that is, when any scheduling occurs in Format0 to Format4, it will be accumulated, that is, Toltalnum+1. Correspondingly, the total number of DTXs can also be synchronously accumulated and recorded in time window 1, that is, DTXnum+1. After the time window timer1 (10ms) times out, if the total number of scheduling times is less than the scheduling threshold, determining whether the scheduling frequency is too high. If the PUCCH channel scheduling is not frequent, the adaptive adjustment process of the Format power target value can be exited; if the scheduling is frequent, calculating the DTX ratio of each Format, that is, DTXRadio=DTXnum/Totainum, and then adjusting the power target value of each PUCCH. For any Format, when DTXRadio is less than LowThr1, the demodulation performance of the current Fomat is very good, and the uplink transmit power target value of the PUCCH of the Format can be lowered, and reducing the transmit power of the PUCCH channel of the Format. When DTXRadio is greater than HighThr2, the current Fomat demodulation performance is poor, the PUCCH uplink transmit power target value for that Format needs to be raised to increase the user terminal's PUCCH transmit power to ensure the base station can correctly receive PUCCH data. When DTX is within the range [LowThr1, HighThr2], the current Fomat demodulation performance is average, no adjustment is required, just keep the current one. Due to differences in reception performance between different Formats, the power target value's step length $\beta_{targetSINR}$ needs to be adjusted according to different formats. For example, the adjustment step lengths for Format 0 to Format 4 correspond to $\beta0$ to $\beta4$, respectively.

Performing adjustment based on the number of DTXs can include the following steps.

First step: turning on the PUCCH power target adaptive switch; if the PUCCH SINR of each power control is within the following range, proceeding to the next step, otherwise exit.

$$PucchPowCt\,rlTargetSINR + TargetSINR\,Margin, PucchPowCt\,rlTargetSINR - TargetSINR\,Margin$$

;

In the formula, PucchPowCtrlTargetSINR is the PUCCH closed-loop power control target SINR, and TargetSINRMargin is the amplitude of the hysteresis range.

Second step: Recording the downstream traffic $DLthrought_{Lst}$.

Third step: Counting the number of scheduling times of the PUCCH channel for different Formats. If there are

PUCCH scheduling, $ToltalNum_n = ToltalNum_{n-1} + 1$, that is, accumulating and recording the total number of scheduling times. If timer 1 times out, $ToltalNum > PucchToltalNumThr$, that is, the total number of scheduling exceeds the threshold, proceeding to the next step; otherwise, exit.

Fourth step: Calculating the current target DTX ratio for different Formats, and adjusting the PUCCH power control target value according to the DTX ratio.

$$DTXRatio = DTXNum / TotalNum;$$

If for any Format $DTXRatio < LowThr1$;

$$PucchPowCtrlT \arg etSINR_n = PucchPowCtrlT \arg etSINR_{n-1} - FilterCoef \times \beta_{t \arg etSINR},$$

where n represents the number of times the adjustment is made, PucchPowCtrlTargetSINRn represents the PUCCH closed-loop power control target SINR after the nth adjustment, FilterCoef is the filter coefficient, and βtargetSINR is the adjustment step length;

If for any Format $DTXRatio > HighThr2$;

$$PucchPowCtrlT \arg etSINR_n = PucchPowCtrlT \arg etSINR_{n-1} + FilterCoef \times \beta_{t \arg etSINR},$$

Otherwise, $PucchPowCtrlT \arg etSINR$ remains unchanged.

In addition, after adjusting based on the number of DTXs, determining whether the above PUCCH uplink transmit power target value adjustment is reasonable according to the downstream traffic; if reasonable, exiting directly and entering the next cycle; if unreasonable, returning to the target value and adjusting. Because DTX is determined based on confidence, if it does not exceed the confidence threshold, it is considered DTX. The confidence threshold setting may be inaccurate. Relying solely on DTX to adjust the target transmit power can result in the phenomenon of a decrease in downstream traffic, or the phenomenon that downstream traffic remains unchanged, but power continues to rise and oversaturation occurs. Therefore, a secondary adjustment based on downstream traffic is required.

The timing of adjustment based on downstream traffic can be determined not only by the number of times the adjustment is made based on DTX, but also by timer 2. That is, after the time window corresponding to timer 2 expires, adjustment based on downstream traffic can be made. For example, after the time window timer 2 (1s) expires, if downstream traffic decreases and performance is compromised, it is considered that the power control target value is adjusted too low, and the TPC needs to be rolled back in sequence and adjusted to the PUCCH power control target value in the format with the largest number of negative times. If downstream traffic rises and the rising difference exceeds the flow threshold, the flow adjustment is too fast, and energy saving is lost, it is considered that the power control target value is adjusted too high, and the TPC needs to be rolled back in sequence and adjusted to the PUCCH power control target value in the format with the largest number of positive times. If downstream traffic remains unchanged but the power control target value is raised, it enters the saturation state, it is considered that the raised power control target value has no performance benefit, and the TPC needs to be rolled back and adjusted to the PUCCH power control target value in the Format with the number of negative times.

Adjusting based on the downstream traffic may include the following steps.

Fifth step: Recording the number of positive and negative TPC adjustment times for different Formats, $TPCNum_{Fmt} +$, $TPCNum_{Fmt} -$.

Sixth step: Recording the downstream traffic after the target value adjustment, $DLthrought_{Cur}$, and calculating the difference in downstream traffic before and after the target value adjustment:

$$\Delta DLthrought = DLthrought_{Cur} - DLthrought_{Lst}$$

Seventh step: If downlink traffic decreases, the TPC is rolled back in sequence and adjusted to the PUCCH power control target value in the Format with the number of negative times;

$$PucchPowCtrlT \arg etSINR_n = PucchPowCtrlT \arg etSINR_{n-1} + FilterCoef \times \beta_{t \arg etSINR}$$

Eighth step: If traffic increases by more than the traffic increase threshold, the TPC is rolled back in sequence and adjusted to the PUCCH power control target value in the Format with the number of positive times;

$$\text{If } \Delta DLthrought >= DLthroughtThr ;$$

$$PucchPowCt\,rlT\arg etSINR_n = PucchPowCt\,rlT\arg etSINR_{n-1} - FilterCoef \times \beta_{t\arg etSINR};$$

$$\text{If } 0 < \Delta DLthrought < DLthroughtThr$$

*PucchPowCt rlT* arg *etSINR* unchanged;

Ninth step: If traffic remains unchanged, and the PUCCH uplink transmit power target value is raised, the TPC is rolled back in sequence and adjusted to the PUCCH power control target value in the Format with the number of positive times;

$$\text{If } PucchPowCtrlT\arg etSINR_n > PucchPowCtrlT\arg etSINR_{n-1};$$

$$PucchPowCt\,rlT\arg etSINR_n = PucchPowCt\,rlT\arg etSINR_{n-1} - FilterCoef \times \beta_{t\arg etSINR};$$

Otherwise, *PucchPowCt rlT* arg *etSINR* unchanged.

Combining the nine steps described above, the research content of this paper is how to adaptively adjust the power control target value of PUCCH in different formats. The ultimate goal is to send data with the most appropriate transmit power. Under the premise of ensuring performance, reducing the transmit power of PUCCH in different formats, reducing terminal power consumption and neighboring cell interference, and achieving a trade-off between performance and energy saving.

To clearly illustrate the effectiveness of the present application, the following example is provided:

Example 1:

Step 1: Using a 5MS frame structure (a type of frame structure), a single UE (User Equipment) performs close-range access with full downlink traffic; the system is tested for 12 hours, and the terminal's power consumption is recorded.

Step 2: Using a 1D3U frame structure (a type of frame structure), a single UE performs close-range access with full downlink traffic; the system is tested for 12 hours, and the terminal's power consumption is recorded.

Adaptive comparison of turning on and turning off PUCCH power target value.

Verification:

1) Power consumption comparison: In step 1, there are a lot of Format 3 PUCCH scheduling, it will enter the PUCCH target value adaptation process; the power consumption of the terminal when the PUCCH power target value adaptation is turned on is less than the power consumption of the scenario with the PUCCH power target value adaptation turned off.

2) Power consumption comparison: In step 2, there are a lot of Format 1 PUCCH scheduling, it will enter the PUCCH target value adaptation process; the power consumption of the terminal when the PUCCH power target value adaptation is turned on is less than the power consumption of the scenario with the PUCCH power target value adaptation turned off.

Example 2:

(1) A single UE is connected to a nearby point to perform downlink full-traffic services, and recording the downlink traffic and uplink PUCCH DTX ratio; the UE is moved to a distant point, and the downlink traffic and uplink PUCCH DTX ratio are recorded.

(2) Comparison of turning on and off PUCCH power target adaptation;

(3) Verification:

1) When the terminal is at the nearby point, comparing the downlink traffic and DTX ratio; when PUCCH power target adaptation is turned on, the downlink traffic and DTX ratio of the terminal do not deteriorate compared to the scenario with PUCCH power target adaptation turned off.

2) When the terminal is at a distant point, comparing the downlink traffic and DTX ratio; when PUCCH power target adaptation is turned on, the uplink PUCCH DTX ratio of the terminal does not deteriorate, and the downlink traffic is higher than the downlink traffic in the scenario with PUCCH power target adaptation turned off.

3) With PUCCH power target adaptation turned on, verifying that the terminal's PUCCH uplink transmit power at near point is lower than the turn-off scenario, the base station's PUCCH power target value is lower than the turn-off scenario, and the PUCCH power target value is continuously lowered. Verifying that the terminal's PUCCH uplink transmit power at the far point is higher than the turn-off scenario, and the base station's PUCCH power target value is higher than the turn-off scenario, the PUCCH power target value is continuously raised. The trend of the PUCCH power target value changing with channel conditions is in line with expectations.

4) When the terminal is stable at any point, the final PUCCH's signal-to-noise ratio (SINR) falls within the new target SINR range.

The above disclosure is merely some embodiments of the present application and is not intended to limit the scope of the present application. Persons skilled in the art will understand that equivalent variations made by implementing all or part of the above embodiment in accordance with the claims of the present application are still within the scope of the present application.

That is, the above specific embodiment is intended only to facilitate understanding of the technical concepts of the present application and does not constitute a limitation of the present application. Simple variations based on this technical concept are also intended to fall within the scope of the present application.

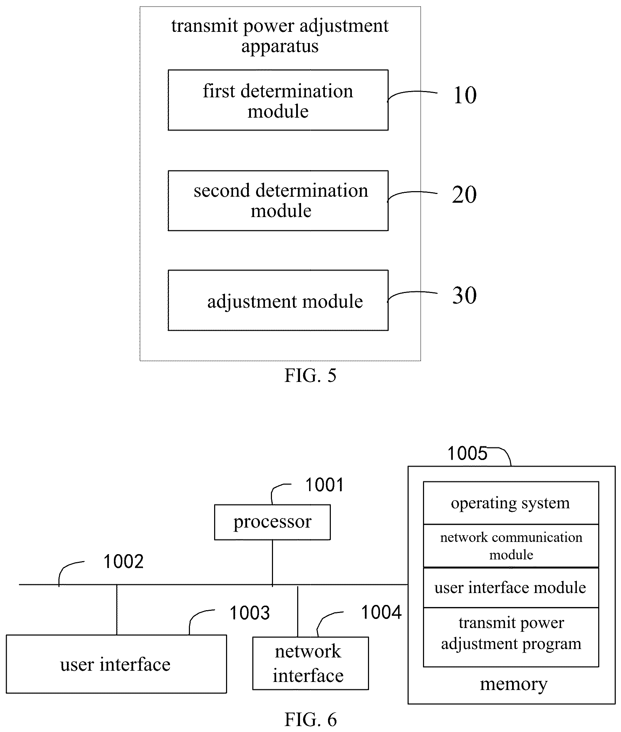

In addition, the present application further provides a transmit power adjustment apparatus. Referring to FIG. 5, which is a functional block diagram of an embodiment of the transmit power adjustment apparatus of the present application.

In this embodiment, the transmit power adjustment apparatus includes:

a first determination module 10 configured for determining a Format of a physical uplink control channel (PUCCH) of a terminal device;

a second determination module 20 configured for determining a target transmit power for each Format; and

an adjustment module 30 configured for adjusting the transmit power of each Format in the terminal device to within a hysteresis range of a corresponding target transmit power.

In some embodiments, the second determination module 20 is further configured for:

monitoring a scheduling frequency of the PUCCH of the terminal device; and

in response to that the scheduling frequency is greater than a preset scheduling frequency threshold, determining the target transmit power for each Format based on a number of discontinuous transmissions (DTX) during communication with the terminal device within a preset unit duration.

In some embodiments, the number of the DTX includes a single DTX number for each Format and a total DTX number for each of the single DTX numbers; the second determination module 20 is further configured for:

determining a DTX ratio of the single DTX number for each Format relative to the total DTX number;

in response to that there is a first DTX ratio that is not within a preset ratio range among the DTX ratios, performing preliminary adjustment on a target transmit power of an associated Format based on the first DTX ratio to determine a new target transmit power; and

in response to that there is a second DTX ratio that is within the preset range among the DTX ratios, maintaining a target transmit power of the Format associated with the second DTX ratio unchanged.

In some embodiments, the second determination module 20 is further configured for:

comparing the first DTX ratio with a boundary value of a preset ratio range, wherein the boundary value includes a preset low ratio threshold and a preset high ratio threshold, and the preset low ratio threshold being less than the preset high ratio threshold;

in response to that the first DTX ratio is less than the preset low ratio threshold, reducing the target transmit power of the associated Format by a preset power adjustment step to obtain a new target transmit power; and

in response to that the first DTX ratio is greater than the preset low ratio threshold, increasing the target transmit power of the associated Format by the preset power adjustment step to obtain the new target transmit power.

In some embodiments, the second determination module 20 is further configured for:

in response to that a number of adjustment times for the preliminary adjustment reaches a preset number of times threshold, performing readjustment on each target transmit power based on a change situation of a downstream traffic during communication with the terminal device; and

resetting the number of adjustment times.

In some embodiments, the second determination module 20 is further configured for:

obtaining a downstream traffic after the number of adjustment times starts triggering an accumulation as a first downlink traffic;

obtaining a downstream traffic after the number of adjustment times reaches the preset number of times threshold to determine a second downstream traffic; and

determining the change situation of the downstream traffic during communication with the terminal device according to the first downstream traffic and the second downstream traffic.

In some embodiments, the second determination module 20 is further configured for:

in response to that the change situation is that the downstream traffic increases and an amount of increase in the downstream traffic is less than or equal to a preset threshold of the amount of increase, maintaining each target transmit power unchanged.

In some embodiments, the second determination module 20 is further configured for:

in response to that the change situation is that the downstream traffic remains unchanged and an overall transmit power of each target transmit power is not raised in a process of accumulating the number of adjustment times, maintaining each target transmit power unchanged.

In some embodiments, the second determination module 20 is further configured for:

in response to that the change situation is that the downstream traffic remains unchanged and an overall transmit power of each target transmit power is raised in a process of accumulating the number of adjustment times, taking a target transmit power with a largest number of times of raising power in an accumulating process of the number of adjustment times as a readjustment object;

lowering the readjustment object by a preset power adjustment step, and obtaining a readjusted target transmit power;

after adjusting a transmit power of the Format associated with the readjusted target transmit power in the terminal device to within a hysteresis range of the readjusted target transmit power, obtaining a current downstream traffic of the terminal device and re-determining the second downstream traffic; and

executing the determining the change situation of the downstream traffic during communication with the terminal device according to the first downstream traffic and the second downstream traffic and subsequent steps based on a re-determined second downstream traffic.

In some embodiments, the second determination module 20 is further configured for:

in response to that the change situation is that the downstream traffic decreases, taking a target transmit power with a largest number of times of lowering power in an accumulating process of the number of adjustment times as a readjustment object;

raising the readjustment object by a preset power adjustment step and obtaining a readjusted target transmit power;

after adjusting a transmit power of the Format associated with the readjusted target transmit power in the terminal device to within a hysteresis range of the readjusted target transmit power, obtaining a current downstream traffic of the terminal device and re-determining the second downstream traffic; and

executing the determining the change situation of the downstream traffic during communication with the terminal device according to the first downstream traffic and the second downstream traffic and subsequent steps based on a re-determined second downstream traffic.

In some embodiments, the second determination module 20 is further configured for:

in response to that the change situation is that the downstream traffic increases and an amount of increase in the downstream traffic is greater than a preset threshold of the amount of increase, taking a target transmit power with a largest number of times of raising power in an accumulating process of the number of adjustment times as a readjustment object;

lowering the readjustment object by a preset power adjustment step and obtaining a readjusted target transmit power;

after adjusting a transmit power of the Format associated with the readjusted target transmit power in the terminal device to within a hysteresis range of the readjusted target transmit power, obtaining a current downstream traffic of the terminal device and re-determining the second downstream traffic; and

executing the determining the change situation of the downstream traffic during communication with the terminal device according to the first downstream traffic and the second downstream traffic and subsequent steps based on a re-determined second downstream traffic.

The transmit power adjustment apparatus provided in this embodiment and the transmit power adjustment method provided in the above-mentioned embodiment are based on the same inventive concept. Technical details not fully described in this embodiment can be found in the above-mentioned embodiments of the transmit power adjustment method. This embodiment has the same beneficial effects as the various embodiments of the transmit power adjustment method and will not be repeated here.

The apparatus embodiments described above are merely illustrative. The units described as separate components may or may not be physically separate, that is, they may be located in one location or distributed across multiple network elements. Some or all of these modules may be selected to achieve the purposes of this embodiment based on actual needs.

In addition, embodiments of the present application further provide a transmit power adjustment device. This transmit power adjustment device may be, for example, a base station, or may be a mobile network access management entity or a node.

Referring to FIG. 6, FIG. 6 is a schematic diagram of the hardware structure of a device provided in an embodiment of the present application. As shown in FIG. 6, the device may include: a processor 1001, such as a central processing unit (CPU), a communication bus 1002, a user interface 1003, a network interface 1004, and a memory 1005. Communication bus 1002 is used to enable communication between these components. User interface 1003 may include a display and an input unit, such as a keyboard. User interface 1003 may also include a standard wired interface or a wireless interface. Network interface 1004 may include a standard wired interface or a wireless interface (such as a wireless fidelity (WI-FI) interface). Memory 1005 may be a high-speed random access memory (RAM) or a stable non-volatile memory (NVM), such as a disk drive. Memory 1005 may also be a storage device independent of processor 1001.

Those skilled in the art will appreciate that the structure shown in FIG. 6 does not limit the device; it may include more or fewer components than shown, or combine certain components, or have a different component arrangement. As shown in FIG. 6, the memory 1005 as a storage medium may include an operating system, a data storage module, a network communication module, a user interface module, and a transmit power adjustment program.

In the device shown in FIG. 6, the network interface 1004 is mainly used for data communication with other devices; the user interface 1003 is mainly used for data interaction with the user; the processor 1001 and the memory 1005 in this embodiment can be set in the communication device, and the communication device calls the transmit power adjustment program stored in the memory 1005 by the processor 1001 and executes the transmit power adjustment method provided in any of the above-mentioned embodiments.

The terminal proposed in this embodiment and the transmit power adjustment method proposed in the above-mentioned embodiment belong to the same inventive concept. For technical details not fully described in this embodiment, refer to any of the above-mentioned embodiments. This embodiment has the same beneficial effects as the transmit power adjustment method.

In addition, embodiments of the present application further provide a storage medium, which is a computer storage medium. The computer-readable storage medium may be a non-volatile computer-readable storage medium. The computer-readable storage medium stores a transmit power adjustment program. When executed by a processor, the transmit power adjustment program implements the transmit power adjustment method described above.

The various embodiments of the device and computer-readable storage medium of the present application may refer to the various embodiments of the transmit power adjustment method of the present application, and will not be repeated here.

It should be noted that, as used herein, the terms "comprise", "include", or any other variations thereof are intended to encompass non-exclusive inclusion, such that a process, method, article, or system including a list of elements includes not only those elements but also other elements not explicitly listed, or includes elements inherent to such process, method, article, or system. Without further limitation, an element specified by the phrase "including a..." does not preclude the presence of additional identical elements in the process, method, article, or system including such an element.

The serial numbers of the embodiments of the present application are for descriptive purposes only and do not represent the superiority or inferiority of each embodiment.

By the above description of the embodiments, those skilled in the art will clearly understand that the methods of the above embodiments can be implemented using software and a necessary general-purpose hardware platform. Of course, hardware can also be used, but in many cases, the former is the preferred implementation method. Based on this understanding, the technical solution of the present application, or the portion that contributes to the prior art, can be embodied in the form of a software product. This computer software product is stored in a storage medium (such as ROM/RAM, a magnetic disk, or an optical disk) as described above and includes instructions for enabling a device (which can be a base station, a computer, a server, or a network device, etc.) to execute the methods described in each embodiment of the present application.

The above are merely optional embodiments of the present application and do not limit the scope of the present application. Any equivalent structures or equivalent processes that are transformed using the content of this specification and drawings, or that are directly or indirectly applied to other related technical fields, are also included within the scope of the present application.

**Claims**

1. A transmit power adjustment method, **characterized by** comprising:

   determining a Format of a physical uplink control channel, PUCCH, of a terminal device;
   determining a target transmit power for each Format; and
   adjusting the transmit power of each Format in the terminal device to within a hysteresis range of a corresponding target transmit power.

2. The transmit power adjustment method according to claim 1, wherein the determining the target transmit power for each Format comprises:

   monitoring a scheduling frequency of the PUCCH of the terminal device; and
   in response to that the scheduling frequency is greater than a preset scheduling frequency threshold, determining the target transmit power for each Format based on a number of discontinuous transmissions, DTX, during communication with the terminal device within a preset unit duration.

3. The transmit power adjustment method according to claim 2, wherein the number of the DTX comprises a single DTX number for each Format and a total DTX number for each of the single DTX numbers;
   the determining the target transmit power for each Format based on the number of discontinuous transmissions, DTX, during communication with the terminal device within the preset unit duration comprises:

   determining a DTX ratio of the single DTX number for each Format relative to the total DTX number;
   in response to that there is a first DTX ratio that is not within a preset ratio range among the DTX ratios, performing preliminary adjustment on a target transmit power of an associated Format based on the first DTX ratio to determine a new target transmit power; and
   in response to that there is a second DTX ratio that is within the preset range among the DTX ratios, maintaining a target transmit power of the Format associated with the second DTX ratio unchanged.

4. The transmit power adjustment method according to claim 3, wherein the performing preliminary adjustment on the target transmit power of the associated Format based on the first DTX ratio to determine the new target transmit power comprises:

   comparing the first DTX ratio with a boundary value of a preset ratio range, wherein the boundary value comprises a preset low ratio threshold and a preset high ratio threshold, and the preset low ratio threshold is less than the preset high ratio threshold;
   in response to that the first DTX ratio is less than the preset low ratio threshold, reducing the target transmit power of the associated Format by a preset power adjustment step to obtain a new target transmit power; and
   in response to that the first DTX ratio is greater than the preset low ratio threshold, increasing the target transmit power of the associated Format by the preset power adjustment step to obtain the new target transmit power.

5. The transmit power adjustment method according to claim 3, wherein the determining the target transmit power for each Format further comprises:

in response to that a number of adjustment times for the preliminary adjustment reaches a preset number of times threshold, performing readjustment on each target transmit power based on a change situation of a downstream traffic during communication with the terminal device; and
resetting the number of adjustment times.

6. The transmit power adjustment method according to claim 5, wherein before the performing readjustment on each target transmit power based on the change situation of the downstream traffic during communication with the terminal device, the method comprises:

obtaining a downstream traffic after the number of adjustment times starts triggering an accumulation as a first downlink traffic;
obtaining a downstream traffic after the number of adjustment times reaches the preset number of times threshold to determine a second downstream traffic; and
determining the change situation of the downstream traffic during communication with the terminal device according to the first downstream traffic and the second downstream traffic.

7. The transmit power adjustment method according to claim 5, wherein the performing readjustment on each target transmit power based on the change situation of the downstream traffic during communication with the terminal device comprises:
in response to that the change situation is that the downstream traffic increases and an amount of increase in the downstream traffic is less than or equal to a preset threshold of the amount of increase, maintaining each target transmit power unchanged.

8. The transmit power adjustment method according to claim 5, wherein the performing readjustment on each target transmit power based on the change situation of the downstream traffic during communication with the terminal device further comprises:
in response to that the change situation is that the downstream traffic remains unchanged and an overall transmit power of each target transmit power is not raised in a process of accumulating the number of adjustment times, maintaining each target transmit power unchanged.

9. The transmit power adjustment method according to claim 6, wherein the performing readjustment on each target transmit power based on the change situation of the downstream traffic during communication with the terminal device further comprises:

in response to that the change situation is that the downstream traffic remains unchanged and an overall transmit power of each target transmit power is raised in a process of accumulating the number of adjustment times, taking a target transmit power with a largest number of times of raising power in an accumulating process of the number of adjustment times as a readjustment object;
lowering the readjustment object by a preset power adjustment step, and obtaining a readjusted target transmit power;
after adjusting a transmit power of the Format associated with the readjusted target transmit power in the terminal device to within a hysteresis range of the readjusted target transmit power, obtaining a current downstream traffic of the terminal device and re-determining the second downstream traffic; and
executing the determining the change situation of the downstream traffic during communication with the terminal device according to the first downstream traffic and the second downstream traffic and subsequent steps based on a re-determined second downstream traffic.

10. The transmit power adjustment method according to claim 6, wherein the performing readjustment on each target transmit power based on the change situation of the downstream traffic during communication with the terminal device further comprises:

in response to that the change situation is that the downstream traffic decreases, taking a target transmit power with a largest number of times of lowering power in an accumulating process of the number of adjustment times as a readjustment object;
raising the readjustment object by a preset power adjustment step and obtaining a readjusted target transmit power;
after adjusting a transmit power of the Format associated with the readjusted target transmit power in the terminal device to within a hysteresis range of the readjusted target transmit power, obtaining a current downstream traffic of the terminal device and re-determining the second downstream traffic; and
executing the determining the change situation of the downstream traffic during communication with the terminal device according to the first downstream traffic and the second downstream traffic and subsequent steps based on a re-determined second downstream traffic.

11. The transmit power adjustment method according to claim 6, wherein the performing examination on each target transmit power based on the change situation of the downstream traffic during communication with the terminal device further comprises:

in response to that the change situation is that the downstream traffic increases and an amount of increase in the downstream traffic is greater than a preset threshold of the amount of increase, taking a target transmit power with a largest number of times of raising power in an accumulating process of the number of adjustment times as a readjustment object;
lowering the readjustment object by a preset power adjustment step and obtaining a readjusted target transmit power;
after adjusting a transmit power of the Format associated with the readjusted target transmit power in the terminal device to within a hysteresis range of the readjusted target transmit power, obtaining a current downstream traffic of the terminal device and re-determining the second downstream traffic; and
executing the determining the change situation of the downstream traffic during communication with the terminal device according to the first downstream traffic and the second downstream traffic and subsequent steps based on a re-determined second downstream traffic.

12. A transmit power adjustment apparatus, **characterized by** comprising:

a first determination module configured for determining a Format of a physical uplink control channel, PUCCH, of a terminal device;
a second determination module configured for determining a target transmit power for each Format; and
an adjustment module configured for adjusting the transmit power of each Format in the terminal device to within a hysteresis range of a corresponding target transmit power.

13. A transmit power adjustment device, **characterized by** comprising: a memory, a processor, and a transmit power adjustment program stored in the memory and executable on the processor, wherein the transmit power adjustment method according to any one of claims 1 to 11 is implemented when the transmit power adjustment program is executed by the processor.

14. A readable storage medium, wherein a transmit power adjustment program is stored on the readable storage medium, and the transmit power adjustment method according to any one of claims 1 to 11 is implemented when the transmit power adjustment program is executed by a processor.

```
┌─────────────────────────────────────────────────────────┐        ┌─ S10
│   determining a Format of a physical uplink control channel │ ╱
│             (PUCCH) of a terminal device                    │╱
└─────────────────────────────────────────────────────────┘
                            │
                            ▼
┌─────────────────────────────────────────────────────────┐        ┌─ S20
│      determining a target transmit power for each Format    │ ╱
│                                                             │╱
└─────────────────────────────────────────────────────────┘
                            │
                            ▼
┌─────────────────────────────────────────────────────────┐        ┌─ S30
│ adjusting the transmit power of each Format in the terminal device │ ╱
│ to within a hysteresis range of a corresponding target transmit │╱
│ power                                                       │
└─────────────────────────────────────────────────────────┘
```

FIG. 1

monitoring a scheduling frequency of the PUCCH of the terminal device /⌐ A10

in response to that the scheduling frequency is greater than a preset scheduling frequency threshold, determining the target transmit power for each Format based on a number of discontinuous transmissions DTX during communication with the terminal device within a preset unit duration /⌐ A20

FIG. 2

in response to that a number of adjustment times for the preliminary adjustment reaches a preset number of times threshold, performing readjustment on each target transmit power based on a change situation of a downstream traffic during communication with the terminal device /⌐ B10

resetting the number of adjustment times /⌐ B20

FIG. 3

FIG. 4

transmit power adjustment apparatus

first determination module    10

second determination module    20

adjustment module    30

FIG. 5

1005

1001

processor

1002

1003    1004

user interface

network interface

operating system

network communication module

user interface module

transmit power adjustment program

memory

FIG. 6

## INTERNATIONAL SEARCH REPORT

| International application No. |
|---|
| **PCT/CN2023/129960** |

| A. | CLASSIFICATION OF SUBJECT MATTER |
|---|---|

H04W 52/14(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 功率, 上行链路控制信道, 格式, 终端, 目标, 迟滞, 范围, 频率, 百分比, 比, 比例, 比值, 比重, 配比, 占比, 不连续, 非连续, 发送, 发射; PUCCH, format, power, UE, frequency, DTX

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109803364 A (TELECOMMUNICATIONS TECHNOLOGY RESEARCH INSTITUTE CO., LTD.) 24 May 2019 (2019-05-24) <br> description, paragraphs [0299]-[0636] | 1, 12-14 |
| A | CN 106714290 A (ZTE CORP.) 24 May 2017 (2017-05-24) <br> entire document | 1-14 |
| A | CN 111630906 A (QUALCOMM INC.) 04 September 2020 (2020-09-04) <br> entire document | 1-14 |
| A | US 2013286948 A1 (DATANG MOBILE COMMUNICATIONS EQUIPMENT CO., LTD.) 31 October 2013 (2013-10-31) <br> entire document | 1-14 |
| A | CATT. "Transmit Diversity for PUCCH Format 1b with Channel Selection" <br> *3GPP TSG RAN WG1 Meeting #68, R1-120088*, 10 February 2012 (2012-02-10), <br> entire document | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2024** | **20 January 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 109803364 | A | 24 May 2019 | WO | 2019095880 | A1 | 23 May 2019 |
| | | | | KR | 20200078603 | A | 01 July 2020 |
| | | | | EP | 3713313 | A1 | 23 September 2020 |
| | | | | US | 2020374805 | A1 | 26 November 2020 |
| | | | | JP | 2021503793 | W | 12 February 2021 |
| CN | 106714290 | A | 24 May 2017 | WO | 2017084378 | A1 | 26 May 2017 |
| CN | 111630906 | A | 04 September 2020 | JP | 2021511739 | A | 06 May 2021 |
| | | | | EP | 3744132 | A1 | 02 December 2020 |
| | | | | KR | 20200110348 | A | 23 September 2020 |
| | | | | US | 2019230597 | A1 | 25 July 2019 |
| | | | | WO | 2019147577 | A1 | 01 August 2019 |
| US | 2013286948 | A1 | 31 October 2013 | JP | 2014502122 | A | 23 January 2014 |
| | | | | WO | 2012092878 | A1 | 12 July 2012 |
| | | | | KR | 20130105679 | A | 25 September 2013 |
| | | | | EP | 2706795 | A1 | 12 March 2014 |

International application No.

**PCT/CN2023/129960**

Form PCT/ISA/210 (patent family annex) (July 2022)

**EP 4 694 385 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310485236